# EUROPEAN PATENT APPLICATION

(11) **EP 4 015 198 A1**
(43) Date of publication of application: **22.06.2022**
(21) Application number: 20383099.7
(22) Date of filing: 16.12.2020
(51) Int. Cl.: B29C 70/54, B29C 70/82, B29C 70/24

(54) **A REINFORCED COMPOSITE LAMINATE AND METHOD FOR MANUFACTURING THEREOF**

(71) Applicant: Airbus Operations, S.L.U., 28906 Getafe (ES)
(72) Inventor: JONES, John Arthur, 28906 Getafe (ES)

(57) **Abstract**

The present invention describes a reinforced composite laminate (1) for an aircraft (8) and a method to manufacture thereof. The laminate (1) comprises a set of stacked plies of pre-preg material laid up forming a XY plane, wherein the laminate (1) further comprises a plurality of elongated carbon pins (2) comprising a round section with a diameter smaller than 0,5mm. The pins (2) are nailed through the stacked of plies following the Z direction to withstand the out-of-plane loads.

## Description

### TECHNICAL FIELD OF THE INVENTION

The present invention belongs to the field of composite parts and their manufacture, particularly, the invention provides a reinforced composite laminate for an aircraft and a method for manufacturing thereof. Accordingly, an object of the present invention is to provide an advanced composite laminate for an aircraft to prevent delamination and peel off failures.

### BACKGROUND OF THE INVENTION

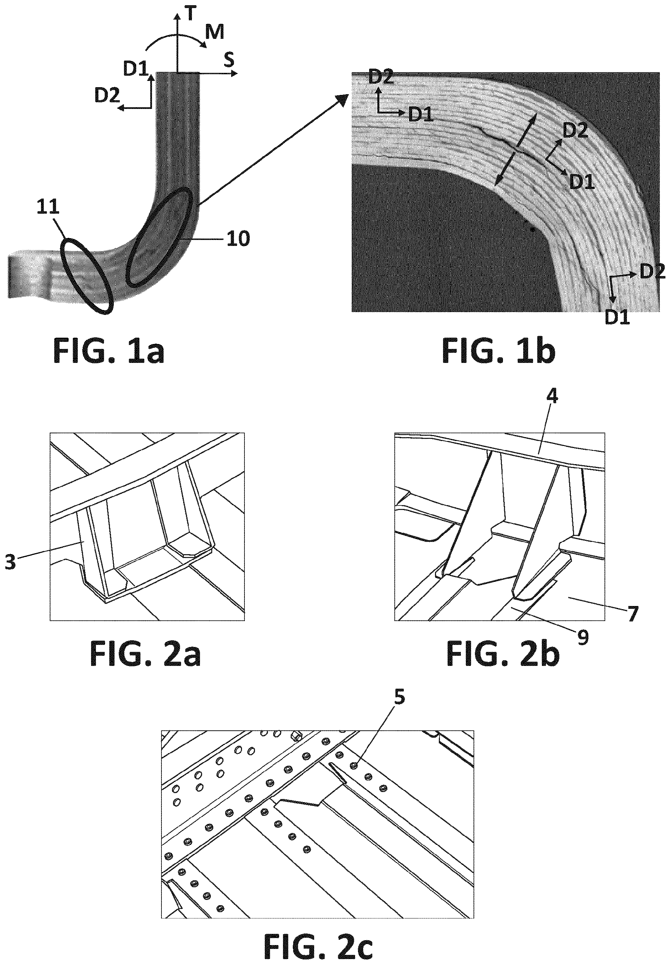

Delamination in pre-preg composites is a well-known problem. In composite structures, there are different types of delamination depending on how factors such as pressure, geometry, stacking, etc. produce out of plane effects that may lead to delamination in the run out areas of the structure and/or corner unfolding failures such as the ones shown in Figure 1a, and Figure 1b in a detailed view.

Figure 1a shows shear (S) and tensile (T) direction forces applied to a curved composite part whose fibers follow the D1 direction and whose plies are stacked following the D2 direction. In curved pre-preg composites, the inter-laminar stresses (S, T) and moments (M) are eventually too high for the resin to handle. In this case, the composite part shows an unfolding failure (10) in its corner area due to inter-laminar shear stress and peeling stress, and a pull-through failure (11) in the straight area due to the inter-laminar shear stresses. Figure 1b shows in detail the unfolding failure (10) in the curved part.

In order to prevent delamination failures, fittings such as clips and cleats have to be used in several parts of the aircraft, as well as through its fuselage. Figures 2a - 2c show different examples of these ancillary pieces required to prevent delamination. Figure 2a shows a first cleat configuration (3) designed for corner unfolding events. Figure 2b shows a second cleat configuration (4) designed to prevent skin (7) to stringer (9) delamination. Figure 2c shows chicken rivets (5) used for securing parts. In some areas, these cleats have to be made of Titanium to prevent corrosion, involving a high cost and weight.

Furthermore, some structures require that local areas increase their thicknesses in order to reduce the through thickness stresses, making the structure altogether heavier. Particularly, this is the case of CFRP frames potentially driven by corner unfolding. This entails additional weight to the structures and complexity to their installation.

Therefore, there is a need in the aerospace industry for new technical means that provides reinforced composite laminates that reduces weight and costs, at the same time that prevents delamination.

### SUMMARY OF THE INVENTION

The present invention overcomes the above mentioned drawbacks by providing a reinforced composite laminate for an aircraft that reduces weight and costs, and a method for manufacturing said reinforced composite laminate for an aircraft.

In a first inventive aspect, the invention provides a reinforced composite laminate for an aircraft that comprises a set of stacked plies of pre-preg material laid up forming on a XY plane, and a plurality of elongated carbon pins comprising a round section with a diameter smaller than 0,5mm. Pins are nailed through the stacked of plies following the Z direction to withstand the out-of-plane loads.

This reinforced composite laminate prevents delamination by reinforcing composite prepreg material, through the thickness of its stack of plies with minimum damage to the underlying plies. Further, the reinforced laminate allows removing clips, cleats, and local thickness increase, reducing the weight and cost associated to these ancillary pieces and simplifying the installation of parts including these reinforced composite laminates.

In a second inventive aspect, the invention provides a method for manufacturing a reinforced composite laminate for an aircraft, the method comprising the steps of:
a) providing a set of stacked plies of pre-preg material laid up forming a XY plane,
b) providing a plurality of elongated carbon pins comprising a round section with a diameter smaller than 0,5mm,
c) inserting the carbon pins through the stacked of plies following a Z direction to withstand the out-of-plane loads in order to obtain a reinforced composite laminate.

In a third inventive aspect, the invention provides an aircraft comprising a reinforced composite laminate according to the first inventive aspect.

In a fourth inventive aspect, the invention provides a data processing apparatus comprising means for carrying out the method according to the second inventive aspect.

In a fifth inventive aspect, the invention provides a computer program comprising instructions which, when the program is executed by a computer, cause the computer to carry out the method according to the second inventive aspect.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figure 1: These figures show delamination in a composite prepreg part. Figure 1a shows unfolding and pull-through failures. Figure 1b shows the unfolding failure in detail.
- Figure 2: These figures show state of the art pieces used to prevent delamination. Figure 2a shows a cleat designed to prevent corner unfolding events. Figure 2b shows another cleat designed to prevent skin to stringer delamination. Figure 2c shows chicken rivets used for securing parts.
- Figure 3: This figure shows a schematic representation of a composite laminate, in which carbon pins are being inserted by an ultrasonic hammer to obtain the reinforced composite laminate of the invention.
- Figure 4: These figures show different embodiments of the reinforced composite laminate of the invention. Figures 4a and 4b show two reinforced composite laminates. Figure 4c shows the carbon pins in detail.
- Figure 5: This figure shows a lateral schematic representation of a reinforced composite laminate of the invention whose pins cross through all the plies forming the laminate.
- Figure 6: This figure shows a bottom view of a reinforced part in which the carbon pins driven through the pre-preg stacked of plies that form the laminate are seen in detail.
- Figure 7: This figure shows an aircraft comprising a reinforced composite laminate of the invention.

### DETAILED DESCRIPTION OF THE INVENTION

According to the invention, the reinforced composite laminate (1) comprises a set of stacked plies of pre-preg material laid up forming a XY plane, and a plurality of elongated carbon pins (2). These pins (2) have a round section with a diameter smaller than 0,5mm, and are nailed through the stacked of plies following the Z direction to withstand the out-of-plane loads.

To obtain the reinforced composite laminate (1) of the invention, the method comprises the following steps:
a) providing a set of stacked plies of pre-preg material laid up forming a XY plane,
b) providing a plurality of elongated carbon pins (2) comprising a round section with a diameter smaller than 0,5mm,
c) inserting the carbon pins (2) through the stacked of plies following a Z direction to withstand the out-of-plane loads in order to obtain a reinforced composite laminate (1).

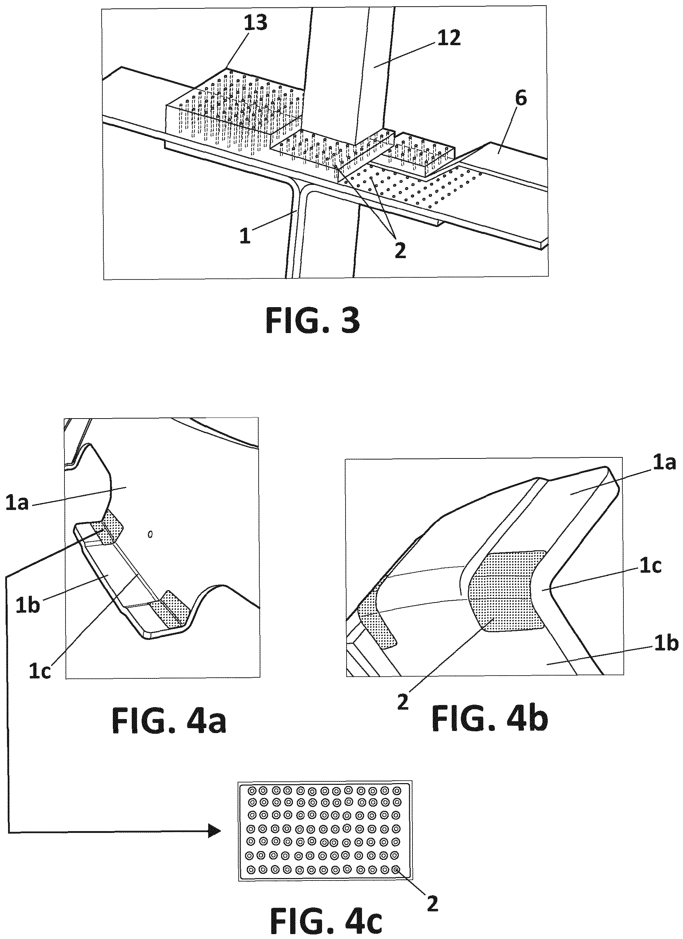

Figure 3 shows a preferred alternative to insert the carbon pins (2) through the stacked of pre-preg plies. As shown, pins (2) are at least partially inserted into a foam (13) placed over the pre-preg plies to allow the insertion of the pins into the plies. The foam (13) is pressed by an ultrasonic hammer (12), inserting the pins (2) into the plies. A cutting tool (6) is used to cut the pins (2) crossing both the plies and the foam (13). The pressed foam (13) is discarded.

As shown in Figures 4a and 4b, and according to a preferred embodiment, the reinforced composite laminate (1) comprises a first part (1a) following a first direction, a second part (1b) following a second direction, and a transition area (1c) between the first and second parts (1a, 1b) comprising an angle between the first and second parts (1a, 1b) of at least 60º, and wherein the plurality of carbon pins (2) are contained in the transition area (1c). Figure 4c shows the carbon pins in detail.

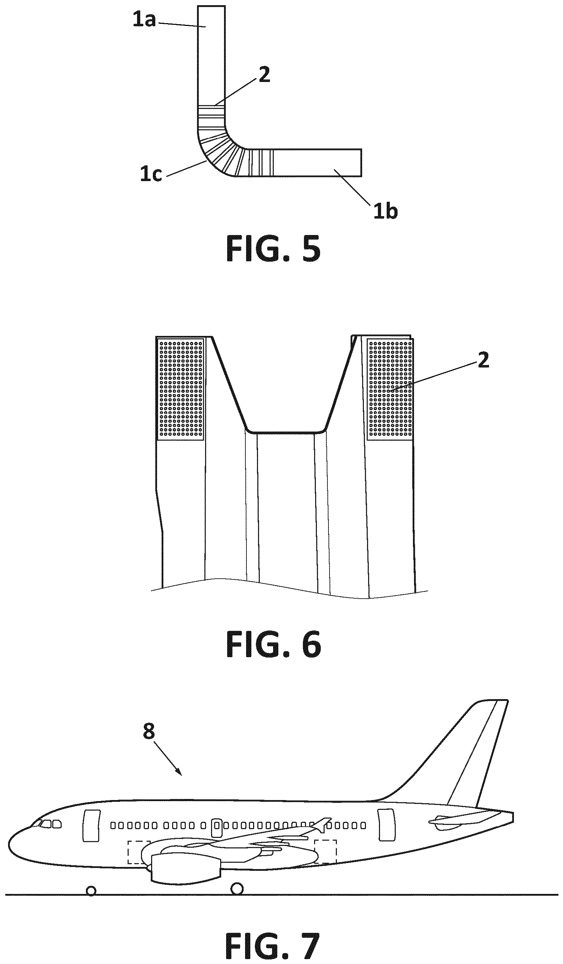

As shown in Figure 5, and according to another preferred embodiment, the first part (1a) and/or the second part (1b) further comprises pins (2) in their adjacent areas to the transition area (1c).

As shown in Figure 6, and according to another preferred embodiment, the carbon pins (2) are distributed continuously along the XY laminate plane forming a continuous pattern.

Preferably, the carbon pins (2) comprise bismaleimide (BMI) resin.

According to another preferred embodiment, a structure for an aircraft (8) comprising at least one reinforced composite laminate (1) according to any preceding claims, and a further composite laminate formed by a further set of stacked plies of pre-preg material, wherein the pins (2) of the reinforced composite laminate (1) passed through its plies crossing at least one plie of the further composite laminate to reinforce their perform a joining.

Figure 7 shows an aircraft (8) comprising a reinforced composite laminate (1) according to the present invention.

## Claims

1. A reinforced composite laminate (1) for an aircraft (8), comprising a set of stacked plies of pre-preg material laid up forming a XY plane, wherein the laminate (1) further comprises a plurality of elongated carbon pins (2) comprising a round section with a diameter smaller than 0,5mm, wherein said pins (2) are nailed through the stacked of plies following the Z direction to withstand the out-of-plane loads.

2. A reinforced composite laminate (1) according to claim 1, wherein the composite laminate (1) comprises a first part (1a) following a first direction, a second part (1b) following a second direction, and a transition area (1c) between the first and second parts (1a, 1b) comprising an angle between the first and second parts (1a, 1b) of at least 60º, and wherein the plurality of carbon pins (2) are contained in the transition area (1c).

3. A reinforced composite laminate (1) according to claim 2, wherein the first part (1a) and/or the second part (1b) further comprises pins (2) in their adjacent areas to the transition area (1c).

4. A reinforced composite laminate (1) according to any preceding claims, wherein the carbon pins (2) are distributed continuously along the XY laminate plane forming a continuous pattern.

5. A reinforced composite laminate (1) according to any preceding claims, wherein the carbon pins (2) are made of bismaleimide resin.

6. A structure for an aircraft (8) comprising at least one reinforced composite laminate (1) according to any preceding claims, and a further composite laminate formed by a further set of stacked plies of pre-preg material, wherein the pins (2) of the reinforced composite laminate (1) passed through at least one plie of the further composite laminate to perform a joining.

7. An aircraft (8) comprising a reinforced composite laminate (1) according to any of claims 1 to 6.

8. A method for manufacturing a reinforced composite laminate (1) for an aircraft (8), the method comprising the steps of:
a) providing a set of stacked plies of pre-preg material laid up forming a XY plane,
b) providing a plurality of elongated carbon pins (2) comprising a round section with a diameter smaller than 0,5mm,
c) inserting the carbon pins (2) through the stacked of plies following a Z direction to withstand the out-of-plane loads in order to obtain a reinforced composite laminate (1).

9. A method for manufacturing a reinforced composite laminate (1) for an aircraft (8), according to claim 8, wherein the composite laminate (1) comprises:
- a first part (1a) following a first direction,
- a second part (1b) following a second direction, and
- a transition area (1c) between the first and second parts (1a, 1b) comprising an angle between the first and second parts (1a, 1b) of at least 60º,
and wherein the plurality of carbon pins (2) are inserted into the transition area (1c).

10. A method for manufacturing a reinforced composite laminate (1) for an aircraft (8), according to any of claims 8-9, wherein the carbon pins (2) are inserted by an ultrasonic hammer (12).

11. A method for manufacturing a reinforced composite laminate (1) for an aircraft (8), according to any of claims 8-10, further comprising inserting the pins (2) into the adjacent areas to the transition area (1c) of the first part (1a) and/or the second part (1b) of the laminate (1).

12. A method for manufacturing a reinforced composite laminate (1) for an aircraft (8), according to any of claims 8-11, wherein the carbon pins (2) are inserted continuously along the XY laminate plane forming a continuous pattern.

13. A method for manufacturing a reinforced composite laminate (1) for an aircraft (8), according to any of claims 8-12,
- wherein the method comprises the step of providing a further composite laminate formed by a further set of stacked plies of pre-preg material,
- and, wherein the step c) of inserting the carbon pins (2) through the stacked of plies of the reinforced composite laminate (1) is performed so as to insert at least one plie of the further composite laminate to perform a joining between the laminates.
